# EUROPEAN PATENT SPECIFICATION

(11) **EP 1 843 862 B1**
(45) Date of publication and mention of the grant of the patent: **12.11.2014**
(21) Application number: 06734479.6
(22) Date of filing: 03.02.2006
(51) Int. Cl.: B05D 7/00, C09D 5/02

(54) **PROCESS FOR THE PRODUCTION OF PRIMER SURFACER-FREE MULTI-LAYER COATINGS**
VERFAHREN ZUR HERSTELLUNG MEHRSCHICHTIGER BESCHICHTUNGEN OHNE FÜLLER
PROCEDE D'OBTENTION DE REVETEMENTS MULTICOUCHES SANS APPRET D'IMPRESSION

(30) Priority: 04.02.2005 US 51864
(43) Date of publication of application: 17.10.2007
(73) Proprietor: Coatings Foreign IP Co. LLC, Wilmington, DE 19801 (US)
(72) Inventor: TEN ELZEN, Kerstin, 42553 Velbert (DE); HEUSER, Astrid, 42553 Velbert (DE); MEHLMANN, Sandra, 35794 Mengerskirchen (DE); AVGENAKI, Giannoula, 40589 Duesseldorf (DE); PASCHMANN, Volker, 45239 Essen (DE)
(74) Representative: Maiwald Patentanwalts GmbH
(86) International application number: PCT/US2006/004227
(87) International publication number: WO 2006/084260

(56) References cited:
- EP-A- 0 576 943
- WO-A-2004/105965
- WO-A-2005/021168
- WO-A-2006/017197
- US-A- 5 968 655
- US-A- 5 976 343

## Description

### Field of the Invention

The invention relates to a process for the production of primer surfacer-free (comprising no filler layer) multi-layer coatings.

### Description of the Prior Art

Automotive coatings consist, as a rule, of a separately baked electrodeposition coating (EDC) primer, a separately baked primer surfacer layer (filler layer) applied thereto and a top coat applied thereto comprising a wet-on-wet applied color- and/or special effect-imparting base coat layer and a protective, gloss-imparting clear coat layer. The total primer surfacer plus base coat layer thickness is generally 30 to 60 µm.

A process is known from U.S. 5,976,343 for the production of decorative multi-layer coatings, which process allows for the elimination of the application and separate baking of a primer surfacer layer which, of course, reduces coating material consumption and the total layer thickness. In this process, a multi-layer coating structure comprising a first, modified water-borne base coat, a second, unmodified water-borne base coat and a clear coat is applied by a wet-on-wet-on-wet process comprising the joint curing of these three coating layers that are applied to a baked EDC primer. In practice, this process uses two base coat layers that allow for markedly lower total layer thicknesses by approximately 15 to 25 µm, than that of a conventional primer surfacer and base coat. The modified water-borne base coat has a higher content of polyurethane resin than the unmodified water-borne base coat and may be produced from the unmodified water-borne base coat by mixing with polyurethane resin and is intended to replace the function of a conventional primer surfacer.

A weakness of the process known from U.S. 5,976,343 is that it is not readily possible to produce multi-layer coatings in certain color shades ("problematic color shades"). The reason is UV light (UV radiation), as a constituent of natural daylight, passes through the coating layers applied to the EDC primer to the surface of the EDC primer to a noticeable extent in the absence of a primer surfacer layer and causes degradation of the EDC primer.

The color shades which are problematic with regard to the production of primer surfacer-free multi-layer coatings are those which, while (like unproblematic color shades) providing a coating which appears to an observer to be opaque, permit an inadmissibly large amount of UV light to penetrate through the multi-layer structure of clear coat, unmodified water-borne base coat and modified water-borne base coat to the surface of the EDC primer and cause long term damage to the EDC layer. Such problematic color shades are to be found both among single (plain) color shades and special effect color shades. Examples may, in particular, be found among water-borne base coats with dark blue single color shades based on phthalocyanine pigments and among water-borne base coats with specific special effect color shades, for example, dark blue metallic color shades or light metallic color shades, such as, in particular, silver color shades and among water-borne base coats with specific special effect color shades containing elevated proportions of mica pigments in the pigment content. In the case of the problematic color shades, the UV light may penetrate through the multi-layer coating structure, for example, to an extent exceeding the specified UV transmission level and reaches the EDC layer.

Car manufacturers' specifications state, for example, that UV transmission through the base coat layer in the area of the complete outer skin of the vehicle body should amount to less than 0.1% in the wavelength range of from 280 to 380 nm and less than 0.5% in the wavelength range of from 380 to 400 nm. The possible undesired long-term consequences of an inadmissible level of UV light penetration to the EDC layer are chalking of the EDC layer and delamination of the multi-layer coating over the service life of the coated substrates.

Alternatively, the modified and/or the unmodified water-borne base coat could be applied in an overall higher layer thickness sufficient to prevent to an adequate degree the access of UV light to the EDC primer. However, this would be a backward technological step in the direction of high total film thickness.

The use of UV absorbers in clear coats or base coats is known, for example, from U.S. 5,574,166 and WO 94/18278, and is a solution to the problem of delamination. However, UV absorbers cannot be used to a very great extent in the base coat layers and/or the clear coat layer because of the migration tendency of the UV absorbers and because of the gradual degradation of the UV absorbers, as well as for cost reasons.

Other solutions, which approach the delamination problem from the EDC side are known from EP 0 576 943, U.S. 6,368,719, U.S. 2003/0054193 A1 and U.S. 2003/0098238 A1. These disclose the use of EDC coating compositions which are resistant to the action of UV light due to specially selected binders or due to the addition of suitable additives. This inevitably restricts the EDC composition, such that concessions may have to be made in relation to other technological properties, such as, for example, corrosion protection.

Surprisingly, the advantages of the process according to U.S. 5,976,343 (dispensing with application of primer surfacer and providing low total film thickness) may be retained while nevertheless sufficiently suppressing access of UV light, which is destructive over the long term, to the EDC primer if the unmodified water-borne base coat is modified with a binder containing preparation pigmented in a specific manner as an admixture component instead of the admixture component known from U.S. 5,976,343 in the form of pigment-free polyurethane resin. UV transmission through the base coat layer formed of modified water-borne base coat and unmodified water-borne base coat may then be adjusted to less than 0.1% in the wavelength range of from 280 to 380 nm and to less than 0.5% in the wavelength range of from 380 to 400 nm, whereby, for example, corresponding car manufacturers' specifications may be fulfilled.

The addition of aqueous filler (extender) pastes containing polyurethane resin to water-borne base coats is known from U.S. 5,968,655. The filler pastes may contain pigments. The water-borne base coats modified by addition of the filler pastes are applied onto EDC-primed substrates, overcoated with unmodified water-borne base coat and clear coat and baked together. The above-mentioned problem solved by the present invention of excessively high UV transmission is neither directly nor indirectly addressed in U.S. 5,968,655.

### Summary of the Invention

The invention is directed to a process for the production of multi-layer coatings, comprising the successive steps:
1) applying a 10 to 35 µm thick base coat layer to a substrate provided with an EDC primer,
2) applying a clear coat layer onto the base coat layer,
3) jointly curing the base coat and clear coat layers,
wherein the base coat layer is applied in a first layer and in a second layer; the first layer comprises a modified water-borne base coat produced by mixing an unmodified water-borne base coat with a pigmented admixture component and the second layer comprises the unmodified water-borne base coat,
wherein the admixture component contains one or more binders A, has a ratio by weight of pigment content to resin solids content of 0.05 : 1 to 1 : 1 and is mixed into the unmodified water-borne base coat in a ratio by weight of 0.1 to 1 parts of binder(s) A : 1 part of resin solids of the unmodified water-borne base coat,
wherein the pigment content of the admixture component comprises at least one pigment which effectively reduces UV transmission and wherein the pigment content is made (composed) in such a way that UV light can penetrate through the base coat layer formed from modified water-borne base coat and unmodified water-borne base coat only in accordance with a UV transmission of less than 0.1% in the wavelength range of from 280 to 380 nm and of less than 0.5% in the wavelength range of from 380 to 400 nm.

The unmodified water-borne base coats are distinguished in that UV light corresponding to a UV transmission of more than 0.1 % in the wavelength range of from 280 to 380 nm and/or of more than 0.5% in the wavelength range of from 380 to 400 nm may penetrate through a base coat layer applied in the process film thickness and consisting of a relevant water-borne base coat modified with pigment-free binder(s) A in a ratio by weight of 0.1 to 1 parts of binder(s) A : 1 part of resin solids of the unmodified water-borne base coat and the corresponding unmodified water-borne base coat.

### Detailed Description of the Embodiments

The term "pigment content" means the sum of all the pigments contained in a coating composition without fillers (extenders). The term "pigments" is used here as in DIN 55944 and covers, in addition to special effect pigments, inorganic white, colored and black pigments and organic colored and black pigments. At the same time, therefore, DIN 55944 distinguishes between pigments and fillers.

The description and the claims mention "pigments which effectively reduce UV transmission". Obviously, all pigments ultimately reduce UV transmission, but to a differing extent depending on the pigment, such that a distinction can be drawn between two groups of pigments, those exhibiting stronger UV absorption or UV reflection and those exhibiting weaker UV absorption or UV reflection. Accordingly, the phrase "pigment which effectively reduces UV transmission" means a pigment, which is sufficiently suited to reducing UV transmission for the purposes of the process according to the invention.

The description and the claims mention "one or more binders A". This serves to distinguish between the binder(s) of the unmodified water-borne base coat and the binder(s) of the admixture component (binder(s) A).

In the process according to the invention conventional substrates provided with an EDC primer are coated. In particular, the substrates are automotive bodies or body parts provided with an EDC primer, in particular, a cathodic electrodeposition (CED) coating. The production of substrates provided with an EDC primer is known to the person skilled in the art. There are no restrictions with regard to the selection of the EDC primer; in particular, EDC primers are also suitable which would be damaged by long-term exposure to UV light.

The substrates having an EDC primer are provided, first of all, with a base coat layer in a process film thickness in the range from 10 to 35 µm. The base coat layer is applied in two layers, i.e., a first layer, for example, 5 to 25 µm thick of a modified water-borne base coat produced by mixing an unmodified water-borne base coat with the admixture component is applied and a subsequent second layer, for example, 3 to 20 µm thick of the unmodified water-borne base coat then is applied. The total film thickness of the base coat layer is dependent inter alia on color shade; car manufacturers' requirements for base coat film thickness are expressed in the so-called process film thickness (average film thickness which is desired over the entire body in the automotive original coating process), which is directed towards the film thickness for each base coat color shade required to achieve the desired color shade on the substrate and to achieve technological properties (e.g., stone chip resistance) and towards an economic application of the relevant water-borne base coat, i.e., in as thin a film as possible. The total base coat film thickness ranges from 10 to 35 µm and is the sum of, for example, 5 to 25 µm of the modified water-borne base coat plus, for example, 3 to 20 µm of the unmodified water-borne base coat. Such film thicknesses for base coats meet the requirements for coating the relevant substrates, for example, automotive bodies. In particular, this means that a specific value within this range from 10 to 35 µm represents the process film thickness for a particular individual base coat. Said specific process film thickness is here composed of the sum of the specific process film thickness, lying within the range of, for example, 5 to 25 µm, of the corresponding modified water-borne base coat and the specific process film thickness, lying within the range of, for example, 3 to 20 µm of the corresponding unmodified water-borne base coat.

The film thicknesses indicated in the present description and in the claims for coating layers refer in each case to dry film thicknesses.

In the description and in the claims, a distinction is drawn between unmodified and modified water-borne base coats.

The unmodified water-borne base coats, from which the modified water-borne base coats may be produced by mixing with the admixture component containing one or more binders A and having a pigment content, are aqueous coating compositions having a ratio by weight of pigment content to resin solids content of, for example, 0.05 : 1 to 0.6 : 1. In addition to water, a resin solids content, which comprises binder(s), optionally, paste resin(s) and optionally, cross-linking agent(s), pigment(s), optionally, filler(s) and optionally, organic solvent(s), the unmodified water-borne base coats contain in general also conventional additive(s).

The unmodified water-borne base coats contain ionically and/or non-ionically stabilized binder systems. These are preferably anionically and/or non-ionically stabilized. Anionic stabilization is preferably achieved by at least partially neutralized carboxyl groups in the binder, while nonionic stabilization is preferably achieved by lateral or terminal polyethylene oxide units in the binder. The unmodified water-borne base coats may be physically drying or crosslinkable by formation of covalent bonds. The crosslinkable unmodified water-borne base coats forming covalent bonds may be self- or externally crosslinkable systems.

The unmodified water-borne base coats contain one or more conventional film-forming binders. They may optionally also contain crosslinking agents if the binders are not self-crosslinkable or physically drying. Examples of film-forming binders, which may be used, are conventional polyester, polyurethane, (meth)acrylic copolymer and/or hybrid resins derived from these classes of resin. Selection of the optionally contained crosslinking agents depends, in a manner familiar to the person skilled in the art, on the functionality of the binders, i.e., the crosslinking agents are selected in such a way that they exhibit a reactive functionality complementary to the functionality of the binders. Examples of such complementary functionalities between binder and crosslinking agent are: carboxyl/epoxy, hydroxyl/methylol ether and/or methylol (methylol ether and/or methylol preferably, as crosslinkable groups of aminoplast resins, in particular, melamine resins).

The term "polyurethane resin" used in the above paragraph and in the following description and claims does not rule out that the polyurethane resin in question may also contain groups other than urethane groups in the polymer backbone, such as, in particular, ester groups and/or urea groups. Instead, the term "polyurethane resin" of course, also in particular, includes polyurethane resins which contain polyester polyol building blocks and/or urea groups, wherein the latter may, for example, be formed by the reaction of isocyanate groups with water and/or polyamine.

The unmodified water-borne base coats contain conventional pigments, for example, special effect pigments and/or pigments selected from among white, colored and black pigments.

Examples of special effect pigments are conventional pigments which impart to a coating color flop and/or lightness flop dependent on the angle of observation, such as, non-leafing metal pigments, for example, of aluminum, copper or other metals, interference pigments, such as, for example, metal oxide-coated metal pigments, for example, iron oxide-coated aluminum, coated mica, such as, for example, titanium dioxide-coated mica, graphite effect-imparting pigments, iron oxide in flake form, liquid crystal pigments, coated aluminum oxide pigments, coated silicon dioxide pigments.

Examples of white, colored and black pigments are the conventional inorganic or organic pigments known to the person skilled in the art, such as, for example, titanium dioxide, iron oxide pigments, carbon black, azo pigments, phthalocyanine pigments, quinacridone pigments, pyrrolopyrrole pigments, and perylene pigments.

The unmodified water-borne base coats with problematic color shades have such low levels of pigmentation (ratio by weight of pigment content to resin solids content) and/or such pigment contents that, by virtue of the type and proportion of the constituent pigments, UV light corresponding to a UV transmission of more than 0.1 % in the wavelength range of from 280 to 380 nm and/or of more than 0.5% in the wavelength range of from 380 to 400 nm may penetrate through a base coat layer applied in the process film thickness and consisting of a relevant water-borne base coat modified with pigment-free binder(s) A in a ratio by weight of 0.1 to 1 parts of binder(s) A : 1 part of resin solids of the unmodified water-borne base coat and the corresponding unmodified water-borne base coat. The unmodified water-borne base coats with problematic color shades accordingly have excessively low levels of pigmentation and/or pigment contents without or with excessively small proportions of pigments which effectively reduce UV transmission. Such unmodified water-borne base coats with problematic color shades may be found among unmodified water-borne base coats both with single color shades and with special effect color shades. Examples may in particular be found among water-borne base coats with dark blue single color shades based on phthalocyanine pigments and among water-borne base coats with specific special effect color shades, for example, dark blue metallic color shades or light metallic color shades, such as, in particular, silver color shades and among water-borne base coats with specific special effect color shades containing elevated proportions of mica pigments in the pigment content.

UV transmission may be measured by applying a corresponding coating structure of modified water-borne base coat and unmodified water-borne base coat to a UV light-transmitting support, for example, a silica glass plate, and measuring the UV transmission in the corresponding wavelength range using a corresponding uncoated UV light-transmitting support as reference. It is self-explanatory that in order to correctly determine the difference in UV transmission between a base coat structure produced according to the invention making use of the pigmented admixture component and a corresponding base coat structure produced according to the prior art making use of a pigment-free binder(s) A admixture component, it is necessary to work under similar conditions. With regard to the invention this means, in particular, to choose in both cases the same ratio by weight between binder(s) A and resin solids of the unmodified water-borne base coat within the stated range of 0.1 to 1 parts : 1 part.

The unmodified water-borne base coats may also contain fillers, for example, in proportions of 0 to 30 wt.% relative to the resin solids content. The fillers do not constitute part of the pigment content of the unmodified water-borne base coats. Examples are barium sulfate, kaolin, talcum, silicon dioxide, layered silicates and any mixtures thereof.

The special effect pigments are generally initially introduced in the form of a conventional commercial aqueous or non-aqueous paste, optionally, combined with preferably water-dilutable organic solvents and additives and then mixed with aqueous binder. Pulverulent special-effect pigments may first be processed with preferably water-dilutable organic solvents and additives to yield a paste.

White, colored and black pigments and/or fillers may, for example, be ground in a proportion of the aqueous binder. Grinding may preferably also take place in a special aqueous paste resin. Grinding may be performed in conventional assemblies known to the person skilled in the art. The formulation is then completed with the remaining proportion of the aqueous binder or of the aqueous paste resin.

The unmodified water-borne base coats may contain conventional additives in conventional quantities, for example, of 0.1 to 5 wt.%, relative to the solids content thereof. Examples are antifoaming agents, wetting agents, adhesion promoters, catalysts, levelling agents, anticratering agents, thickeners and light stabilizers, for example, UV absorbers and/or HALS-based compounds (HALS, hindered amine light stabilizers). If the unmodified water-borne base coats contain light stabilizers, these are by no means solely responsible for UV light being able to penetrate through the base coat layer formed from modified water-borne base coat and unmodified water-borne base coat only in accordance with a UV transmission of less than 0.1% in the wavelength range of from 280 to 380 nm and of less than 0.5% in the wavelength range of from 380 to 400 nm. This effect is instead, in particular with regard to the durability thereof, achieved by using the pigmented admixture component containing one or more binders A.

The unmodified water-borne base coats may contain conventional solvents, for example, in a proportion of preferably less than 20 wt.%, particularly preferably, less than 15 wt.%. These are conventional coating solvents, which may originate, for example, from production of the binders or are added separately. Examples of such solvents are alcohols, for example, propanol, butanol, hexanol; glycol ethers or esters, for example, diethylene glycol di-C1-C6-alkyl ether, dipropylene glycol di-C1-C6-alkyl ether, ethoxypropanol, ethylene glycol monobutyl ether; glycols, for example, ethylene glycol and/or propylene glycol, and the di- or trimers thereof; N-alkylpyrrolidone, such as, for example, N-methylpyrrolidone; ketones, such as, methyl ethyl ketone, acetone, cyclohexanone; aromatic or aliphatic hydrocarbons, for example, toluene, xylene or linear or branched aliphatic C6-C12 hydrocarbons.

The unmodified water-borne base coats have solids contents of, for example, 10 to 40 wt.%, preferably, of 15 to 30 wt.%.

The modified water-borne base coats may be produced from the unmodified water-borne base coats by mixing with the pigmented admixture component containing one or more binder(s) A in a ratio by weight of 0.1 to 1 parts, preferably of 0.1 to 0.5 parts of binder(s) A : 1 part of resin solids of the unmodified water-borne base coat.

The addition of the admixture component to the unmodified water-borne base coats imparts to the resultant modified water-borne base coats technological properties, such as, for example, stone chip resistance, which are important to the finished multi-layer coating.

The unmodified water-borne base coat and the admixture component are preferably mixed on the user's premises shortly or immediately before application of the modified water-borne base coat. In the case of industrial coating facilities, the unmodified water-borne base coats in each case of a different color shade are each guided in their own circulating line. In the process according to the invention, it is possible to work with only one admixture component or two or more, for example, 2 to 5, in each case differently pigmented admixture components. It may be expedient to use more than one admixture component, each having different pigmentation, if the water-borne base coat is applied in a color shade program with two or more color shades and it is desired to make an adjustment between the particular color shades of the unmodified water-borne base coats and the color shade of the pigmented admixture component. For example, in the case of a light color shade of an unmodified water-borne base coat, the person skilled in the art will tend to select an admixture component with a light-colored pigment content. The admixture component or admixture components, like the differently colored unmodified water-borne base coats, are in each case conveyed in a dedicated circulating line and automatically mixed with the particular unmodified water-borne base coat using mixing technology conventional in industrial coating facilities, for example, by means of a Kenics mixer. When applying water-borne base coat in a color shade program of n color shades, it is therefore not necessary to provide for instance 2n circulating lines (in each case n circulating lines for the different colors of the unmodified water-borne base coats and for the different colors of the modified water-borne base coats), but rather just n circulating lines for the different colors of the unmodified water-borne base coats plus m, for example, 1 to 5, circulating lines for the pigmented admixture component(s). In the event that the color shade program also comprises unproblematic color shades, the corresponding unmodified water-borne base coats need not necessarily be mixed with the or one of the pigmented admixture components for the purpose of preparing the modified water-borne base coats, but it is instead possible in these cases also to work with a corresponding pigment-free admixture component; however, this approach entails an additional circulating line for the pigment-free admixture component.

The admixture component containing one or more binder(s) A and comprising a pigment content is a composition with a solids content of 20 to 100 wt.%, in general, of 30 to 60 wt.%. The volatile content is formed, in addition to possible volatile additives, by water and/or organic solvent. The solids content itself consists of the resin solids content plus the pigments forming the pigment content, optionally, plus fillers and optionally, plus nonvolatile additives. Fillers do not constitute part of the pigment content. The ratio by weight of pigment content to resin solids content is 0.05 : 1 to 1 : 1, in particular 0.1 : 1 to 0.8 : 1. The value of this ratio is the result of the fundamentally selected ratio of pigments to resin solids content and of the specific weight of the individual pigments forming the pigment content.

The resin solids content of the admixture component comprises one or more binders A and, optionally, one or more resins which differ from the binder(s) A and are used as a separate pigment grinding medium or as a pigment grinding auxiliary (so-called grinding or paste resins) and, optionally, one or more crosslinking agents, for example, blocked polyisocyanates, aminoplast resins, such as, for example, melamine resins. In general, the resin solids content consists to an extent of 100 wt.% of the at least one binder A or, for example, of 70 to 99 wt.% of the at least one binder A plus 1 to 20 wt.% of at least one grinding resin differing from the binder(s) A plus 0 to 30 wt.% of at least one crosslinking agent, wherein the weight percentages add up to 100 wt.%.

The binder(s) A of the admixture component may comprise the same binders as in the unmodified water-borne base coats and/or binders which differ therefrom.

The binder(s) A are conventional water-dilutable, in particular anionically stabilized binders, for example, corresponding polyester, polyurethane, (meth)acrylic copolymer and/or hybrid resins derived from these classes of resin. Polyester and in particular polyurethane resins are preferred.

The particularly preferred polyurethane resins comprise in particular anionically stabilized polyurethane resins. In particular they comprise aqueous polyurethane resin solutions or dispersions. Such polyurethane resin dispersions have a solids content of, for example, 20 to 50 wt.%. The weight average molar mass (Mw) of the polyurethane resins amounts, for example, to 1000 to 500000.

Examples of usable polyurethane dispersions are those which may be produced by chain extension of isocyanate-functional prepolymers with polyamine and/or polyol. They are described, for example, in U.S. 4,558,090, U.S. 4,914,148, U.S. 4,851,460 and EP 0 512 524.

Further examples are polyurethane dispersions, which may be produced by chain extension of isocyanate-functional prepolymers with water, as described, for example, in U.S. 4,948,829 and U.S. 5,342,882.

It is also possible to use polyurethane dispersions which are produced by chain extension of isocyanate-reactive polyurethane prepolymers containing active hydrogen with polyisocyanates, as described, for example, in DE 39 03 804 and WO 91/11477.

Polyurethane dispersions based on polyurethane resins chain- extended by means of siloxane bridges may also be used. These are known from U.S. 5,760,123, for example.

Apart from the groups which ensure water dilutability, such as, in particular carboxyl groups, the binders A may comprise functional groups which may be involved in a crosslinking reaction which optionally proceeds during the subsequent thermal curing of the modified water-borne base coat; such crosslinking reactions are in particular addition and/or condensation reactions. The binders A may also be self-crosslinkable. Examples of binders' A functional groups are hydroxyl groups, blocked isocyanate groups and epoxy groups.

The admixture component exhibits a ratio by weight of pigment content to resin solids content of 0.05 : 1 to 1 : 1, in particular, of 0.1 : 1 to 0.8 : 1. The sum of the solids contents contributed by the pigment content and the resin solids content is, for example, 15 to 100 wt.%, in general, 25 to 60 wt.% of the admixture component.

The pigment content of the admixture component comprises at least one pigment, which effectively reduces UV transmission. The pigment content is made in such a manner that, with a given unmodified water-borne base coat, a given mixing ratio of admixture component and unmodified water-borne base coat in the range from 0.1 to 1, preferably, 0.1 to 0.5 parts by weight of binder(s) A : 1 part by weight of resin solids of the unmodified water-borne base coat and a given ratio by weight of pigment content to resin solids content of 0.05 : 1 to 1 : 1 in the admixture component, UV light can penetrate through the base coat layer applied in process film thickness and consisting of the modified water-borne base coat and the unmodified water-borne base coat only in accordance with a UV transmission of less than 0.1 % in the wavelength range of from 280 to 380 nm and of less than 0.5% in the wavelength range of from 380 to 400 nm. In other words, the pigment content comprises at least one pigment which effectively reduces UV transmission and moreover has a qualitative and quantitative composition such that, with a given unmodified water-borne base coat, a given mixing ratio of admixture component and unmodified water-borne base coat and a given ratio by weight of pigment content to resin solids content, in each case in the stated ranges, UV light can penetrate through the base coat layer applied in process film thickness and consisting of the modified water-borne base coat and the unmodified water-borne base coat only in accordance with a UV transmission of less than 0.1 % in the wavelength range of from 280 to 380 nm and of less than 0.5% in the wavelength range of from 380 to 400 nm. In addition to the at least one pigment which effectively reduces UV transmission, the pigment content of the admixture component may also comprise other pigments. In general, however, the pigment content consists solely of one or more pigments which effectively reduce(s) UV transmission.

Examples of pigments which effectively reduce UV transmission and may be used alone or in combination in the pigment content of the admixture component are in particular carbon black, titanium dioxide, iron oxide pigments and aluminum flake pigments, the latter in particular with average particle sizes, for example, in the range from 1 to 20 µm at flake thicknesses of, for example, 10 nm to 1 µm.

Examples of pigment contents of a particularly suitable composition with regard to the desired reduction in UV transmission and for the purposes of the process according to the invention are pigment contents consisting of 0 to 100 wt.% of carbon black, 0 to 100 wt.% of titanium dioxide, 0 to 100 wt.% of one or more aluminum flake pigments, for example, one or more of the aluminum flake pigments stated in the preceding paragraph, 0 to 100 wt.% of one or more iron oxide pigments and 0 to 90 wt.% of one or more other pigments, wherein the weight percentages add up to 100 wt.%. Preferred pigment contents are those consisting of 0 to 100 wt.% of carbon black, 0 to 100 wt.% of titanium dioxide and 0 to 100 wt.% of one or more aluminum flake pigments and in particular, pigment contents enabling various grey shades consisting of 0.1 to 10 wt.% of carbon black and 90 to 99.9 wt.% of titanium dioxide, wherein the weight percentages in each case add up to 100 wt.%.

In general, the pigment or pigments forming the pigment content of the admixture component are ground. Grinding may be performed in conventional assemblies known to the person skilled in the art. The pigments may be ground in the presence of the at least one binder A. One or more grinding resins different from binder(s) A may here be added as grinding auxiliaries. Alternatively, it is however also possible to perform grinding in a separate grinding medium in the form of a grinding resin or a mixture of grinding resins different from binder(s) A.

Aluminum flake pigments are not ground, but instead generally initially introduced in the form of a conventional commercial non-aqueous paste, optionally, combined with preferably water-dilutable organic solvents and optionally, additives and then mixed with the binder(s) A. Pulverulent aluminum flake pigments may first be processed with preferably water-dilutable organic solvents and optionally additives to yield a paste.

Once the pigment preparations have been produced, they are made up into the finished admixture component by being mixed with any remaining or missing constituents. In particular, if grinding was not performed in the presence of binder(s) A, the latter is/are mixed in to yield the finished admixture component.

The admixture component may optionally contain one or more fillers, for example, 0 to below 5 wt.%. Examples of fillers usable in the admixture component are barium sulfate, kaolin, talcum, silicon dioxide, and layered silicates.

The admixture component generally comprises an aqueous composition; the admixture component then contains, for example, 20 to 70 wt.% water. The water may here have entered the admixture component in various different ways, for example, by addition as such or as a constituent of aqueous solutions or dispersions of binder(s) A.

Irrespective of whether it is an aqueous or non-aqueous composition, the admixture component may contain one or more organic solvents, for example, in a total quantity of 5 to 70 wt.%. Examples of such solvents are mono- or polyhydric alcohols, for example, propanol, butanol, hexanol; glycol ethers or esters, for example, diethylene glycol C1-C6 dialkyl ethers, dipropylene glycol C1-C6 dialkyl ethers, ethoxypropanol, butylglycol; glycols, for example, ethylene glycol and/or propylene glycol, and the di- or trimers thereof; N-alkylpyrrolidones, for example N-methylpyrrolidone and ketones, for example, methyl ethyl ketone, acetone, cyclohexanone; aromatic or aliphatic hydrocarbons, for example, toluene, xylene, or linear or branched aliphatic C6-C12 hydrocarbons. The solvents are preferably water-dilutable. The solvent may here have entered the admixture component in various ways, for example, by addition as such or as a constituent of binder(s) A and/or additive preparations.

In addition to the at least one binder A and the pigment(s) forming the pigment content and the in each case optional constituents fillers, water, organic solvent and grinding resin, the admixture component may contain additives in proportions of in each case, for example, 0.1 to 4 wt.%, corresponding a total quantity of in general no more than 6 wt.%. Examples of additives are defoamers, anticratering agents, wetting agents, neutralizing agents and rheology control agents. The admixture component may, although not preferably, contain light stabilizers, for example, UV absorbers and/or HALS-based compounds. If the admixture component contains light stabilizers, these are not crucial to UV light being able to penetrate through the base coat layer formed from modified water-borne base coat and unmodified water-borne base coat only in accordance with a UV transmission of less than 0.1 % in the wavelength range of from 280 to 380 nm and of less than 0.5% in the wavelength range of from 380 to 400 nm. This effect is instead, in particular with regard to the durability thereof, achieved by the pigment content of the admixture component.

As already mentioned above, the process according to the invention may expediently be performed with an admixture component the pigment content whereof has been adjusted relative to the color shade of the unmodified water-borne base coat. To this end, it is possible either to work with a single admixture component which has been pigmented by way of a compromise with the color shade program of the unmodified water-borne base coats used or, alternatively, also to use two or more differently pigmented admixture components. In the latter case, it is of course possible to achieve a greater degree of color shade adjustment between the individual unmodified water-borne base coats and the admixture components by the formation and assignment of appropriate color groups of unmodified water-borne base coats to in each case one of the differently pigmented admixture components.

In the process according to the invention, the EDC-primed substrates are initially spray-coated with the modified water-borne base coat in a dry film thickness of, for example, 5 to 25 µm. This is preferably performed using electrostatically-assisted high-speed rotary atomization.

Then, preferably after a brief flash-off phase of, for example, 30 seconds to 5 minutes at an air temperature of 20 to 25°C, the corresponding unmodified water-borne base coat is spray-applied in a dry film thickness of, for example, 3 to 20 µm. This spray application is preferably pneumatic spray application.

This is preferably also followed by a brief flash-off phase of, for example, 30 seconds to 10 minutes at an air temperature of 20 to 100°C, after which the clear coat is applied in a dry film thickness of, for example, 20 to 60 µm.

All known clear coats are in principle suitable as the clear coat. Usable clear coats are both solvent-containing one-component (1 pack) or two-component (2 pack) clear coats, water-dilutable 1 pack or 2 pack clear coats, powder clear coats or aqueous powder clear coat slurries.

After an optional flash-off phase, the applied water-borne base coat layer consisting of modified and unmodified water-borne base coat and the clear coat layer are jointly cured, for example, by baking, for example, at 80 to 160°C object temperature.

Using the process according to the invention, EDC-primed substrates may be provided with a primer surfacer-free coating. Any destructive access of UV light though the clear coat and the base coat layer applied from the modified and the unmodified water-borne base coat to the EDC primer may here be prevented, despite the base coat layer being applied in a process film thickness of only 10 to 35 µm. Although pigmented admixture components are mixed into the unmodified water-borne base coats during production of the modified water-borne base coats, it is possible with the process according to the invention to produce multi-layer coatings of the desired color shade. Application and baking of a primer surfacer layer is not necessary and the technological properties of the multi-layer coatings meet the requirements of car manufacturers.

The following Examples illustrate the invention. All parts and percentages are on a weight basis unless otherwise indicated.

### Examples

### Example 1 (Production of an Admixture Component):

A pigmented admixture component of the following composition was produced in conventional manner (grinding of the pigments and the talc in a bead mill):
19.4 parts by weight of resin solids (polyurethane binder, Bayhydrol® VPLS 2341 from Bayer)
14.0 parts by weight of titanium dioxide (TiPure® R 706 from DuPont)
0.4 parts by weight of carbon black FW 200 from Degussa
4.5 parts by weight of talc
0.2 parts by weight of dimethylethanol amine
0.6 parts by weight of polyacrylic acid thickener
2.6 parts by weight of defoamer
48.7 parts by weight of deionized water
9.6 parts by weight of organic solvents (4.0 parts by weight of ethylene glycol monobutyl ether, 3.8 parts by weight of diethylene glycol monobutyl ether, 1.8 parts by weight of n-propanol).

### Example 2

The same method was used as in Example 1, but without using titanium dioxide and carbon black.

### Example 3

a) A blue, unmodified, mica pigment-containing water-borne base coat of the following composition was produced:
   15.9 parts by weight of resin solids (6.4 parts by weight of a polyester acrylate resin, 5.8 parts by weight of a polyurethane resin, 3.7 parts by weight of hexamethoxymethylmelamine)
   0.5 parts by weight of Iriodin® SW 9225 from Merck
   0.4 parts by weight of Quindo Magenta RV6843 from Sun Chemical
   1.4 parts by weight of Monolite Blue 3 R from Heubach
   0.2 parts by weight of carbon black FW 200F from Degussa
   0.3 parts by weight of dimethylethanolamine
   0.2 parts by weight of defoamer
   0.6 parts by weight of polyacrylic acid thickener
   1.0 parts by weight of polypropylene glycol 900
   14.6 parts by weight of organic solvents (4.2 parts by weight of ethylene glycol monobutyl ether, 1.7 parts by weight of diethylene glycol monobutyl ether, 0.7 parts by weight of ethylene glycol monohexyl ether, 3.0 parts by weight of N-methylpyrrolidone, 3.5 parts by weight of n-butanol, 1.0 parts by weight of n-propanol, 0.5 parts by weight of Shellsol T)
   64.9 parts by weight of deionized water.
b) A modified water-borne base coat was produced by mixing 100 parts by weight of the unmodified water-borne base coat from a) with 15 parts by weight of the admixture component from Example 1.
c) A modified water-borne base coat was produced by mixing 100 parts by weight of the unmodified water-borne base coat from a) with 12.84 parts by weight of the preparation from Example 2.

### Example 4

a) A silver-colored, unmodified water-borne base coat of the following composition was produced:
   15.3 parts by weight of resin solids (5.6 parts by weight of a polyurethane resin, 5.8 parts by weight of a polyester acrylate resin, 3.9 parts by weight of hexamethoxymethylmelamine)
   3.0 parts by weight of non-leafing aluminum pigments (1.7 parts by weight of Stapa Hydrolan® 8154, 0.8 parts by weight of Stapa Hydrolan® 2156, 0.5 parts by weight of Stapa Hydrolan® 618; Hydrolan®, aluminum pigments from Eckart)
   0.5 parts by weight of layered silicate
   0.4 parts by weight of dimethylethanolamine
   0.3 parts by weight of defoamer
   0.7 parts by weight of polyacrylic acid thickener
   1.7 parts by weight of polypropylene glycol 900
   16.7 parts by weight of organic solvents (6.6 parts by weight of ethylene glycol monobutyl ether, 1.9 parts by weight of N-methylpyrrolidone, 1.0 parts by weight of n-butanol, 4.5 parts by weight of n-propanol, 2.2 parts by weight of isopropanol, 0.5 parts by weight of Shellsol T)
   61.4 parts by weight of deionized water.
b) A modified water-borne base coat was produced by mixing 100 parts by weight of the unmodified water-borne base coat from a) with 15 parts by weight of the admixture component from Example 1.
c) A modified water-borne base coat was produced by mixing 100 parts by weight of the unmodified water-borne base coat from a) with 12.84 parts by weight of the preparation from Example 2.

### Example 5 (Measurement of the UV Transmission of Base Coat Layers):

The modified water-borne base coats 3b and 3c and 4b and 4c respectively were each applied to a quartz glass plate by means of electrostatically-assisted high-speed rotary atomization (3b and 3c in each case to a dry film thickness of 17 µm; 4b and 4c in each case to a dry film thickness of 15 µm).

After 3 minutes and 40 seconds flashing off at room temperature, the corresponding unmodified water-borne base coats 3a and 4a respectively were each pneumatically spray-applied in a 5 µm dry film thickness, flashed off for 5 minutes at 80°C and baked for 20 minutes at 140°C.

Then, the UV transmission of the silica glass plates coated in this way with base coat layers was photometrically determined (uncoated silica glass plate in reference beam path; UV irradiation from the coated side).

The results are shown in Table 1.

**TABLE 1**

| UV transmission in the wavelength range | | |
|---|---|---|
| | 280 to 380 nm | 380 to 400 nm |
| Water-borne base coat 3b+3a | Between 0 and 0.05% | Between 0.05 and 0.2% |
| Water-borne base coat 3c+3a | Between 0 and 0.4% | Between 0.4 and 1.0% |
| Water-borne base coat 4b+4a | Between 0 and 0.1% | Between 0.1 and 0.2% |
| Water-borne base coat 4c+4a | Between 0 and 0.5% | Between 0.5 and 1.1% |

The base coat structures 3b+3a and 4b+4a, each prepared making use of the pigmented admixture component of Example 1 allowed a UV transmission of only less than 0.1 % in the wavelength range of from 280 to 380 nm and of less than 0.5% in the wavelength range of from 380 to 400 nm. The base coat structures 3c+3a and 4c+4a, each prepared making use of the un-pigmented admixture component of Example 2 exceeded that UV transmission limitation.

### Example 6 (Production of Multi-Layer Coatings and Technological Tests):

The modified water-borne base coats 3b and 4b respectively were each applied to steel test panels provided with an EDC primer by means of electrostatically-assisted high-speed rotary atomization (3b to a dry film thickness of 17 µm; 4b to a dry film thickness of 15 µm).

After flashing-off for 3 minutes and 40 seconds at room temperature the corresponding unmodified water-borne base coats 3a and 4a respectively were each spray-applied pneumatically in 5 µm dry film thickness and allowed to flash-off for 5 minutes at 80°C.

The test panels provided in this way with a flashed off base coat layer were then further coated in two ways.
a) Test panels with the base coat structures 3b+3a and 4b+4a respectively were each spray coated with a commercial two-component polyurethane clear coat in 40 µm layer thickness and after flashing-off for 5 minutes at 20°C baked for 30 minutes at 140°C object temperature.
b) The same procedure was observed as in Example 6b). Thereafter the same coating structures of modified and unmodified water-borne base coats and two-component polyurethane clear coat were applied again and under the same conditions as before (simulation of a repair coating).

The test panels produced in this way were subjected to technological tests the results of which are shown in Table 2.

**TABLE 2:**

| Coating | Steam jet resistance 1) | Stone chip resistance 2) | Mono-hit 3) |
|---|---|---|---|
| | | | mm2/degree of rusting |
| 6a (3b+3a) | Ok | 1 | 5/0 |
| 6a (4b+4a) | Ok | 1.5 | 7/0 |
| 6b (3b+3a) | Ok | 1 | 7/1 |
| 6b (4b+4a) | Ok | 1.5 | 8/1 |

### 1) Steam jet test

The effect of cleaning with a steam jet appliance was simulated by the test panel provided previously with an X-cut (diagonal cross) according to DIN EN ISO 7253 being exposed at the crossing point of the diagonal cross for 60 seconds at a nozzle distance of 100 mm to a steam jet of 76 bar (operating pressure) and 60°C (measured 10 cm before the nozzle) with a spraying angle of 90 degrees. The coating delamination was assessed from the side of the diagonal cross in mm. Coating delamination is not acceptable.

### 2) Stone chip resistance (DIN 55996-1)

The testing was carried out by means of stone chip test equipment according to VDA (firm Erichsen, model 508; test conditions: 2 x 500 g steel grit 4-5 mm sharp-edged, 2 bar) at +20°C.
Evaluation of the damage (indicator 0 = no spalling, indicator 5 = complete detachment).

### 3) Mono-hit

Testing by means of stone impact simulator according to "Farbe und Lack", 8/1984, pages 646-653, test temperature: -20°C, test specimen: sphere with a mass of 0.15 g and a diameter of 2 mm, impact angle: 88 degrees, impact velocity: 250 km/h.

Assessment: Statement of the circular area of damage in mm² and the degree of rusting on the damaged area caused by 10 minutes' exposure to a 1% copper sulfate solution; degree of rusting 0 = best value, degree of rusting 5 = poorest value.

## Claims

1. A process for the production of multi-layer coatings comprising the successive steps:
1) applying a 10 to 35 µm thick base coat layer to a substrate provided with an EDC primer,
2) applying a clear coat layer onto the base coat layer,
3) jointly curing the base coat and clear coat layers,
wherein the base coat layer is applied in a first layer and in a second layer; the first layer comprises a modified water-borne base coat produced by mixing an unmodified water-borne base coat with a pigmented admixture component and the second layer comprises the unmodified water-borne base coat,
wherein the admixture component contains one or more binders A, has a ratio by weight of pigment content to resin solids content of 0.05 : 1 to 1 : 1 and is mixed into the unmodified water-borne base coat in a ratio by weight of 0.1 to 1 parts of binder(s) A: 1 part of resin solids of the unmodified water-borne base coat,
wherein the pigment content of the admixture component comprises at least one pigment which effectively reduces UV transmission and wherein the pigment content being such that UV light can penetrate through the base coat layer formed from modified water-borne base coat and unmodified water-borne base coat only in accordance with a UV transmission of less than 0.1% in the wavelength range of from 280 to 380 nm and of less than 0.5% in the wavelength range of from 380 to 400 nm
wherein the unmodified water-borne base coat is distinguished in that UV light corresponding to a UV transmission of more than 0.1 % in the wavelength range of from 280 to 380 nm and/or of more than 0.5% in the wavelength range of from 380 to 400 nm penetrates through a base coat layer applied in the process film thickness and consisting of the unmodified water-borne base coat modified with pigment-free binder(s) A in a ratio by weight of 0.1 to 1 parts of binder(s) A : 1 part of resin solids of the unmodified water-borne base coat and the corresponding unmodified water-borne base coat.

2. The process of claim 1, wherein the at least one binder A is selected from the group consisting of polyester resins, polyurethane resins, (meth)acrylic copolymer resins and hybrid resins derived from these classes of resin.

3. The process of claim 1 or 2, wherein the ratio by weight of pigment content to resin solids content of the admixture component is 0.1:1 to 0.8:1.

4. The process of claim 1, 2 or 3, wherein the ratio by weight of binder(s) A to resin solids of the unmodified water-borne base coat is 0.1 : 1 to 0.5 : 1.

5. The process of any one of the preceding claims, wherein the substrates comprise substrates selected from the group consisting of automotive bodies and body parts.

6. The process of any one of the preceding claims, wherein the modified water-borne base coat is applied to a film thickness of 5 to 25 µm and the unmodified water-borne base coat to a film thickness of 3 to 20 µm.

7. The process of any one of the preceding claims, wherein the admixture component comprises a solids content of 20 to 100 wt.% and the solids content consists of the resin solids content, the pigments forming the pigment content, optionally, fillers and optionally, non-volatile additives.

8. The process of any one of the preceding claims, wherein the at least one pigment which effectively reduces UV transmission is selected from the group consisting of carbon black, titanium dioxide, iron oxide pigments, aluminum flake pigments and combinations thereof.

9. The process of any one of claims 1 to 7, wherein the pigment content of the admixture component consists of
0 to 100 wt.% of carbon black,
0 to 100 wt.% of titanium dioxide,
0 to 100 wt.% of one or more aluminum flake pigments,
0 to 100 wt.% of one or more iron oxide pigments and
0 to 90 wt.% of one or more other pigments,
wherein the weight percentages add up to 100 wt.%.

10. The process of any one of claims 1 to 7, wherein the pigment content of the admixture component consists of
0 to 100 wt.% of carbon black,
0 to 100 wt.% of titanium dioxide and
0 to 100 wt.% of one or more aluminum flake pigments,
wherein the weight percentages add up to 100 wt.%.

11. The process of any one of claims 1 to 7, wherein the pigment content of the admixture component consists of
0.1 to 10 wt.% of carbon black and
90 to 99.9 wt.% of titanium dioxide,
wherein the weight percentages add up to 100 wt.%.

## Patentansprüche

1. Verfahren für die Herstellung mehrschichtiger Beschichtungen umfassend die aufeinanderfolgenden Schritte:
1) Aufbringen einer 10 bis 35 µm dicken Grundlackschicht auf ein Substrat, das mit einer ETL-Grundierung beschichtet ist,
2) Aufbringen einer Klarlackschicht auf die Grundlackschicht,
3) zusammen Aushärten der Grundlack- und Klarlackschichten,
wobei die Grundlackschicht in einer ersten Schicht und in einer zweiten Schicht aufgebracht wird; die erste Schicht einen modifizierten Grundlack auf Wasserbasis umfasst, der durch Mischen eines unmodifizierten Grundlacks auf Wasserbasis mit einer pigmentierten Mischungskomponente hergestellt wird und die zweite Schicht den unmodifizierten Grundlack auf Wasserbasis umfasst,
wobei die Mischungskomponente ein oder mehrere Bindemittel A enthält, ein Gewichtsverhältnis von Pigmentgehalt zum Harzfeststoffgehalt von 0,05 : 1 bis 1 : 1 aufweist und in den unmodifizierten Grundlack auf Wasserbasis in einem Gewichtsverhältnis von 0,1 bis 1 Teil Bindemittel A : 1 Teil Harzfeststoffe des unmodifizierten Grundlacks auf Wasserbasis eingemischt wird,
wobei der Pigmentgehalt der Mischungskomponente mindestens ein Pigment umfasst, das die UV-Transmission wirksam reduziert und wobei der Pigmentgehalt derart ist, dass UV-Licht durch die Grundlackschicht, die aus modifiziertem Grundlack auf Wasserbasis und unmodifiziertem Grundlack auf Wasserbasis gebildet ist, nur einer UV-Transmission gemäß von weniger als 0,1 % im Wellenlängenbereich von 280 bis 380 nm und weniger als 0,5 % im Wellenlängenbereich von 380 bis 400 nm hindurchdringen kann
wobei der unmodifizierte Grundlack auf Wasserbasis sich dadurch differenziert, dass UV-Licht, das einer UV-Transmission von mehr als 0,1 % im Wellenlängenbereich von 280 bis 380 nm und/oder von mehr als 0,5 % im Wellenlängenbereich von 380 bis 400 nm entspricht, durch eine Grundlackschicht hindurchgeht, die in der Prozessfilmdicke aufgebracht worden ist und aus dem unmodifizierten Grundlack auf Wasserbasis besteht, der mit pigmentfreiem Bindemittel/Bindemitteln A in einem Gewichtsverhältnis von 0,1 bis 1 Teil Bindemittel A : 1 Teil Harzfeststoffe des unmodifizierten Grundlacks auf Wasserbasis und des entsprechenden unmodifizierten Grundlacks auf Wasserbasis modifiziert worden ist.

2. Verfahren nach Anspruch 1, wobei das mindestens eine Bindemittel A aus der Gruppe ausgewählt ist bestehend aus Polyesterharzen, Polyurethanharzen, (Meth)acrylcopolymerharzen und hybriden Harzen, die von diesen Harzklassen abgeleitet sind.

3. Verfahren nach Anspruch 1 oder 2, wobei das Gewichtsverhältnis von Pigmentgehalt zu Harzfeststoffgehalt der Mischungskomponente 0,1 : 1 bis 0,8 : 1 beträgt.

4. Verfahren nach Anspruch 1, 2 oder 3, wobei das Gewichtsverhältnis von Bindemittel(n) A zu Harzfeststoffen des unmodifizierten Grundlacks auf Wasserbasis 0,1 : 1 bis 0,5 : 1 beträgt.

5. Verfahren nach einem der vorhergehenden Ansprüche, wobei die Substrate Substrate umfassen, die aus der Gruppe ausgewählt sind bestehend aus Fahrzeugkarosserien und Karosserieteilen.

6. Verfahren nach einem der vorhergehenden Ansprüche, wobei der modifizierte Grundlack auf Wasserbasis in einer Filmdicke von 5 bis 25 µm und der unmodifizierte Grundlack auf Wasserbasis in einer Filmdicke von 3 bis 20 µm aufgebracht wird.

7. Verfahren nach einem der vorhergehenden Ansprüche, wobei die Mischungskomponente einen Feststoffgehalt von 20 bis 100 Gew.-% umfasst und der Feststoffgehalt aus dem Harzfeststoffgehalt, den Pigmenten, die den Pigmentgehalt bilden, wahlweise Füllstoffen und wahlweise nichtflüchtigen Zusatzmitteln besteht.

8. Verfahren nach einem der vorhergehenden Ansprüche, wobei das mindestens eine Pigment, das die UV-Transmission wirksam reduziert, aus der Gruppe ausgewählt ist bestehend aus Ruß, Titandioxid, Eisenoxidpigmenten, Aluminiumflockenpigmenten und Kombinationen davon.

9. Verfahren nach einem der Ansprüche 1 bis 7, wobei der Pigmentgehalt der Mischungskomponente aus Folgendem besteht:
0 bis 100 Gew.-% Ruß,
0 bis 100 Gew.-% Titandioxid,
0 bis 100 Gew.-% eines oder mehrerer Aluminiumflockenpigmente,
0 bis 100 Gew.-% eines oder mehrerer Eisenoxidpigmente und
0 bis 90 Gew.-% eines oder mehrerer anderer Pigmente,
wobei die Gewichtsprozentsätze sich auf 100 Gew.-% addieren.

10. Verfahren nach einem der Ansprüche 1 bis 7, wobei der Pigmentgehalt der Mischungskomponente aus Folgendem besteht:
0 bis 100 Gew.-% Ruß,
0 bis 100 Gew.-% Titandioxid,
0 bis 100 Gew.-% eines oder mehrerer Aluminiumflockenpigmente,
wobei die Gewichtsprozentsätze sich auf 100 Gew.-% addieren.

11. Verfahren nach einem der Ansprüche 1 bis 7, wobei der Pigmentgehalt der Mischungskomponente aus Folgendem besteht:
0,1 bis 10 Gew.-% Ruß und
90 bis 99,9 Gew.-% Titandioxid,
wobei die Gewichtsprozentsätze sich auf 100 Gew.-% addieren.

## Revendications

1. Procédé de production de revêtements multicouches comprenant les étapes successives consistant à :
1) appliquer une couche de revêtement de base de 10 à 35 µm d'épaisseur sur un substrat doté d'un apprêt de type revêtement par électrodéposition (EDC),
2) appliquer une couche de revêtement transparent sur la couche de revêtement de base,
3) durcir conjointement les couches de revêtement de base et de revêtement transparent,
dans lequel la couche de revêtement de base est appliquée dans une première couche et dans une seconde couche ; la première couche comprend un revêtement de base aqueux modifié produit par mélange d'un revêtement de base aqueux non modifié avec un composant de mélange pigmenté et la seconde couche comprend le revêtement de base aqueux non modifié,
dans lequel le composant de mélange contient un ou plusieurs liants A, a un rapport en poids de la teneur en pigment à la teneur en matières solides résineuses de 0,05:1 à 1:1 et est mélangé dans le revêtement de base aqueux non modifié selon un rapport en poids de 0,1 à 1 partie du ou des liants A: 1 partie des matières solides résineuses du revêtement de base aqueux non modifié,
dans lequel la teneur en pigment du composant de mélange comprend au moins un pigment qui réduit de manière efficace la transmission d'UV et dans lequel la teneur en pigment est telle que la lumière UV peut passer à travers la couche de revêtement de base formée à partir du revêtement de base aqueux modifié et du revêtement de base aqueux non modifié seulement, conformément à une transmission d'UV inférieure à 0,1 % dans la plage de longueur d'ondes de 280 à 380 nm et inférieure à 0,5 % dans la plage de longueur d'onde de 380 à 400 nm,
dans lequel le revêtement de base aqueux non modifié se distingue du fait que la lumière UV correspondant à une transmission d'UV de plus de 0,1 % dans la plage de longueur d'onde de 280 à 380 nm et/ou de plus de 0,5 % dans la plage de longueur d'onde de 380 à 400 nm passe à travers une couche de revêtement de base appliquée dans l'épaississement du film du procédé et se compose du revêtement de base aqueux non modifié avec un ou plusieurs liants A exempts de pigment selon un rapport en poids de 0,1 à 1 parties du ou des liants A: 1 partie de matières solides résineuses du revêtement de base aqueux non modifié et le revêtement de base non modifié aqueux correspondant.

2. Procédé selon la revendication 1, dans lequel l'au moins un liant A est sélectionné dans le groupe constitué par les résines de polyester, les résines de polyuréthane, les résines de copolymère (méth)acrylique et les résines hybrides dérivées de ces classes de résine.

3. Procédé selon la revendication 1 ou 2, dans lequel le rapport en poids de la teneur en pigment à la teneur en matières solides résineuses du composant de mélange est de 0,1:1 à 0,8:1.

4. Procédé selon la revendication 1, 2 ou 3, dans lequel le rapport en poids du ou des liants A aux matières solides résineuses du revêtement de base aqueux non modifié est de 0,1:1 à 0,5:1.

5. Procédé selon l'une quelconque des revendications précédentes, dans lequel les substrats comprennent les substrats choisis dans le groupe constitué par les corps automobiles et les parties de corps.

6. Procédé selon l'une quelconque des revendications précédentes, dans lequel le revêtement de base aqueux modifié est appliqué selon une épaisseur de film de 5 à 25 µm et le revêtement de base aqueux non modifié selon une épaisseur de film de 3 à 20 µm.

7. Procédé selon l'une quelconque des revendications précédentes, dans lequel le composant de mélange comprend une teneur en matières solides de 20 à 100 % en poids et la teneur en matières solides se compose de la teneur en matières solides résineuses, de pigments formant la teneur en pigment, facultativement de charges et facultativement d'additifs non volatils.

8. Procédé selon l'une quelconque des revendications précédentes, dans lequel l'au moins un pigment qui réduit efficacement la transmission d'UV est choisi dans le groupe constitué par le noir de carbone, le dioxyde de titane, les pigments d'oxyde de fer, les pigments d'aluminium en paillette et des combinaisons de ceux-ci.

9. Procédé selon l'une quelconque des revendications précédentes 1 à 7, dans lequel la teneur en pigment du composant de mélange se compose de 0 à 100 % en poids de noir de carbone,
0 à 100 % en poids de dioxyde de titane,
0 à 100 % en poids d'un ou plusieurs pigments d'aluminium en paillette,
0 à 100 % en poids d'un ou plusieurs pigments d'oxyde de fer, et
0 à 90 % en poids d'un ou plusieurs autres pigments,
dans lequel l'addition des pourcentages en poids représente 100 % en poids.

10. Procédé selon l'une quelconque des revendications précédentes 1 à 7, dans lequel la teneur en pigment du composant de mélange se compose de 0 à 100 % en poids de noir de carbone,
0 à 100 % en poids de dioxyde de titane, et
0 à 100 % en poids d'un ou plusieurs pigments d'aluminium en paillette,
dans lequel l'addition des pourcentages en poids représente 100 % en poids.

11. Procédé selon l'une quelconque des revendications précédentes 1 à 7, dans lequel la teneur en pigment du composant de mélange se compose de
0,1 à 10 % en poids de noir de carbone, et
90 à 99,9 % en poids de dioxyde de titane,
dans lequel l'addition des pourcentages en poids représente 100 % en poids.
